(19) Europäisches Patentamt
European Patent Office
Office européen des brevets

(11) **EP 2 665 050 A1**

(12) **EUROPEAN PATENT APPLICATION**
published in accordance with Art. 153(4) EPC

(43) Date of publication:
**20.11.2013 Bulletin 2013/47**

(51) Int Cl.:
*G08G 1/00* (2006.01)      *B61L 27/00* (2006.01)
*B61L 29/28* (2006.01)

(21) Application number: **11855916.0**

(22) Date of filing: **29.11.2011**

(86) International application number:
**PCT/JP2011/077570**

(87) International publication number:
**WO 2012/096063 (19.07.2012 Gazette 2012/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2011 JP 2011006029**

(71) Applicant: **Mitsubishi Heavy Industries, Ltd.**
**Tokyo 108-8215 (JP)**

(72) Inventors:
  • **SONODA, Takashi**
    **Tokyo 108-8215 (JP)**
  • **ITO, Yoko**
    **Tokyo 108-8215 (JP)**

  • **NISHIMAE, Etsuji**
    **Tokyo 108-8215 (JP)**
  • **KAMINO Yuichiro**
    **Tokyo 108-8215 (JP)**
  • **OGAWA, Hiroshi**
    **Tokyo 108-8215 (JP)**
  • **KAWAGUCHI, Kentaro**
    **Tokyo 108-8215 (JP)**
  • **MORISHITA, Keiichi**
    **Hiroshima-shi**
    **Hiroshima 733-0036 (JP)**

(74) Representative: **Henkel, Breuer & Partner**
**Patentanwälte**
**Maximiliansplatz 21**
**80333 München (DE)**

(54) **TRAFFIC-FLOW SIMULATION APPARATUS, TRAFFIC-FLOW SIMULATION PROGRAM, AND TRAFFIC-FLOW SIMULATION METHOD**

(57)    An automobile driving simulation unit (84) simulates the driving of an automobile model that simulates an automobile, in a road-network model that simulates a road network comprising a plurality of roads and intersections linking the roads with each other, and a public-transportation-system driving simulation unit (88) simulates the driving of a streetcar transportation system model that simulates a streetcar transportation system, in a route network model that simulates the routes of the streetcar transportation system. A crossing-gate model simulates crossing gates that are provided at places where the roads and the routes of the streetcar transportation system intersect with each other, and that temporarily shut off driving of automo-biles at an intersecting place when a streetcar transportation system is to drive through the intersecting place. The crossing-gate model is activated by a shut-off simulation unit (90).

FIG. 3

EP 2 665 050 A1

## Description

{Technical Field}

The present invention relates to a traffic flow simulation apparatus, a traffic flow simulation program, and a traffic flow simulation method.

{Background Art}

Various methods are proposed as prediction techniques (traffic flow simulations) related to road movement (travel) of automobiles based on computer simulation.

For example, PTL 1 describes a traffic condition prediction apparatus (traffic flow simulator) that creates a travel plan of a driver who has received information of a traffic flow, which is predicted in a road network range generated by traffic environment data based on an OD traffic volume and traffic environment data of each predetermined section, based on the predicted traffic flow and experience of the driver in each predetermined section. The traffic condition prediction apparatus adjusts the OD traffic volume of a predetermined section based on the travel plan and further uses the adjusted OD traffic volume to predict the traffic flow.

{Citation List}

{Patent Literature}

{PTL 1}
The Publication of Japanese Patent No. 4506663

{Summary of Invention}

{Technical Problem}

The transportation that constitutes the traffic flow includes not only automobiles, but also public transportation, such as trains and busses, and electric vehicles as next-generation transport means. Therefore, upon the implementation of new public transportation, it is desirable to be able to predict changes in the traffic flow and the traffic demand or effects of the implementation of the public transportation.
However, the conventional traffic flow simulator as described in PTL 1 cannot simulate the travel of the public transportation.

The present invention has been made in view of the circumstances, and an object of the present invention is to provide a traffic flow simulation apparatus, a traffic flow simulation program, and a traffic flow simulation method that can predict the impact of the entire transportation including public transportation on the traffic.

{Solution to Problem}

To solve the problem, a traffic flow simulation apparatus, a traffic flow simulation program, and a traffic flow simulation method of the present invention adopt the following means.

More specifically, a first aspect of the present invention provides a traffic flow simulation apparatus including: an automobile travel simulation means for simulating travel of an automobile model simulating an automobile in a road network model simulating a road network including a plurality of roads and intersections connecting the plurality of roads; and a public transportation travel simulation means for simulating travel of a public transportation model simulating public transportation in a route network model simulating a route network including a block means for temporarily blocking travel of the automobile according to a route of at least one of guideway transportation and roadway public transportation and according to travel of the public transportation travelling on the route.

According to the traffic flow simulation apparatus of the first aspect of the present invention, the automobile travel simulation means simulates the travel of the automobile model simulating the automobile in the road network model simulating the road network including the plurality of roads and intersections connecting the plurality of road. The automobiles simulated by the automobile models may include electric vehicles.

The public transportation travel simulation means simulates the travel of the public transportation model simulating the public transportation in the route network model simulating the route of at least one of the guideway transportation and the roadway public transportation.

The guideway transportation is public transportation, such as a railway and a subway, that travels on a railroad different from the roads. Meanwhile, the roadway public transportation is public transportation, such as a tram and a bus, that moves along the roads travelled by the automobile.

The route network model includes a simulation of the block means that temporarily blocks the travel of the automobile according to the travel of the public transportation that travels on the route. As a result of the simulation of the block means, the impact of the public transportation on the travel of the automobile is simulated.

Therefore, the present invention can predict the impact of the public transportation on the traffic.

The present invention provides the traffic flow simulation apparatus according to the first aspect, wherein the block means may be a block apparatus that is arranged at a place where the roads and the route of the guideway transportation intersect and that temporarily blocks the travel of the automobile at the intersecting place when the guideway transportation is traveling through the intersecting place.

According to the configuration, the block apparatus is a so-called railroad crossing, and the block means is the block apparatus that operates according to the travel of the guideway transportation. As a result, the impact of the guideway transportation on the travel of the automobile is simulated, and the impact of the travel of the guideway transportation on the travel of the automobile can be predicted.

The present invention provides the traffic flow simulation apparatus according to the first aspect, wherein the roadway public transportation may be a bus, the route of the roadway public transportation may overlap with the roads, and the block means may be a stop where the bus stops.

According to the configuration, the roadway public transportation is the bus, and the block means is the stop of the bus. Therefore, the impact of the bus on the travel of the automobile and the impact of the automobile on the bus are simulated, and the impact of the roadway public transportation on the traffic can be predicted.

The present invention provides the traffic flow simulation apparatus according to the first aspect, wherein the roadway public transportation may be a tram, the route of the roadway public transportation may be along the roads, and the block means may be a traffic light that is arranged at a place where the roads and the route of the tram intersect and that temporarily blocks the travel of the automobile at the intersecting place when the tram is traveling through the intersecting place.

According to the configuration, the roadway public transportation is the tram, and the block means is the traffic light that operates according to the travel of the tram. Therefore, the impact of the tram on the travel of the automobile is simulated, and the impact of the travel of the tram on the travel of the automobile can be predicted.

The present invention provides the traffic flow simulation apparatus according to the first aspect, wherein the traffic flow simulation apparatus may further include a person traveling pattern creation means for creating a traveling pattern of a person including a case in which the person uses at least one of the automobile and the public transportation to arrive at a set destination from a set departure place, the automobile travel simulation means may simulate riding of a person model on the automobile model and leaving of the person model from the automobile model based on the traveling pattern created by the person traveling pattern creation means, and the public transportation travel simulation means may simulate boarding of the person model on the public transportation model and leaving of the person model from the public transportation model based on the traveling pattern created by the person traveling pattern creation means.

According to the configuration, the person traveling pattern creation means creates the traveling pattern of the person including the case in which the person uses at least one of the automobile and the public transportation to arrive at the set destination from the set departure place.

The automobile travel simulation means simulates riding of the person model on the automobile model and leaving of the person model from the automobile model based on the traveling pattern. The public transportation travel simulation means based on the traveling pattern simulates boarding of the person model on the public transportation model and leaving of the person model from the public transportation model.

Therefore, the present invention can simulate the behavior of the person using the automobile and the public transportation.

The present invention provides the traffic flow simulation apparatus according to the first aspect, wherein the traffic flow simulation apparatus may further include a travel time calculation means for calculating travel time for the person model to travel from the set departure place to the set destination based on the traveling pattern.

According to the configuration, the travel time for the person model to travel from the set departure place to the set destination is calculated based on the traveling pattern. Therefore, the impact of the transportation on the movement of the person can be more accurately evaluated.

The present invention provides the traffic flow simulation apparatus according to the first aspect, wherein the traffic flow simulation apparatus may further include a storage control means for controlling a storage means to store the traveling pattern and a simulation result of the person model using the traveling pattern when the travel time calculated by the travel time calculation means is equal to or smaller than a preset tolerance.

According to the configuration, the tolerance indicates a time sense as a standard for the arrival of the person at the destination. The traveling pattern equal to or smaller than the tolerance and the simulation result of the person model using the traveling pattern are stored in the storage means. Therefore, average behavior of the persons using the transportation can be discriminated.

The present invention provides the traffic flow simulation apparatus according to the first aspect, wherein a maximum number of persons that can be boarded may be set in the public transportation model, and the traffic flow simulation apparatus may further include a use state calculation means for calculating a use state of the person in the public transportation model.

According to the configuration, the number of persons that can be boarded is set to the public transportation model, and the use state calculation means calculates the use state of the person in the public transportation model. Examples of the use state of the public transportation model include the number of persons boarded on the public transportation model, a degree of congestion of the public transportation model, total waiting time until boarding on the public transportation model, and a total amount of fare required until the arrival at the destination if the fare of the public transportation is set.

Therefore, the present invention can multilaterally evaluate the impact of the public transportation on the movement of the person.

The present invention provides the traffic flow simulation apparatus according to the first aspect, wherein energy consumption by travelling may be set in the public transportation model, and the traffic flow simulation apparatus may further include an energy consumption calculation means for calculating total energy consumption consumed by the travel of the public transportation model.

According to the configuration, the energy consumption calculation means calculates the energy consumption consumed by the travel of the public transportation model. Therefore, the impact of the implementation of the public transportation can be more multilaterally evaluated.

Meanwhile, a second aspect of the present invention provides a traffic flow simulation program for causing a computer to function as: an automobile travel simulation means for simulating travel of an automobile model simulating an automobile in a road network model simulating a road network including a plurality of roads and intersections connecting the plurality of roads; a public transportation travel simulation means for simulating travel of a public transportation model simulating public transportation in a route network model simulating a route network including a route of at least one of guideway transportation and roadway public transportation that are the public transportation; and a block simulation means for simulating operation of a block means model simulating a block means for temporarily blocking the travel of the automobile according to the travel of the public transportation travelling on the route.

According to the traffic flow simulation program of the second aspect of the present invention, the block means is included in the route network model, and the impact of the public transportation on the travel of the automobile is simulated. Therefore, the present invention can predict the impact of the public transportation on the traffic.

Furthermore, a third aspect of the present invention provides a traffic flow simulation method including: a first step of simulating travel of an automobile model simulating an automobile in a road network model simulating a road network including a plurality of roads and intersections connecting the plurality of roads, and of simulating travel of a public transportation model simulating public transportation in a route network model simulating a route network including a route of at least one of guideway transportation and roadway public transportation that are the public transportation; and a second step of simulating operation of a block means model simulating a block means for temporarily blocking the travel of the automobile according to the travel of the public transportation travelling on the route.

According to the traffic flow simulation of the third aspect of the present invention, the block means is included in the route network model, and the impact of the public transportation on the travel of the automobile is simulated. Therefore, the present invention can predict the impact of the public transportation on the traffic.

{Advantageous Effects of Invention}

The present invention can attain an excellent effect of predicting the impact of the transportation on the traffic.

{Brief Description of Drawings}

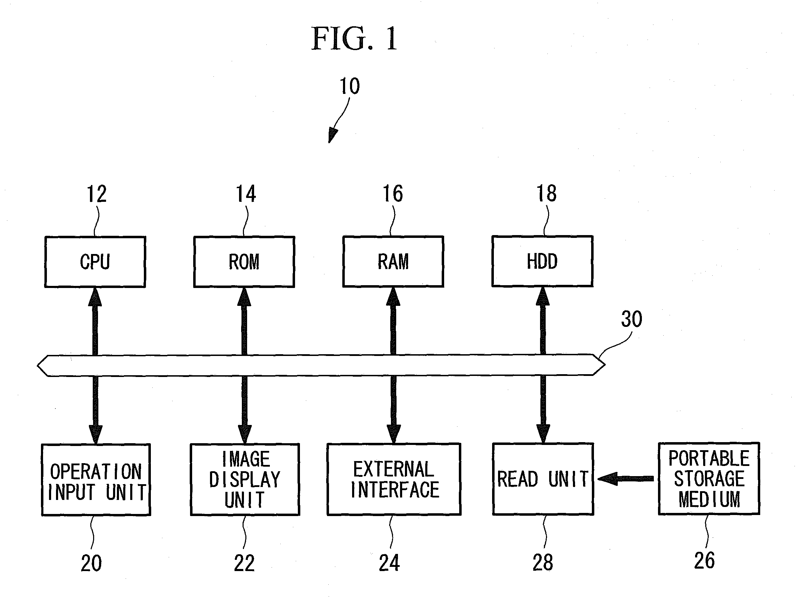

{Fig. 1}
Fig. 1 is a diagram showing a configuration of main parts of an electrical system of a traffic flow simulation apparatus according to a first embodiment of the present invention.
{Fig. 2}
Fig. 2 is a schematic diagram showing a configuration of a road network model and a route network model of guideway transportation in a traffic flow simulation according to the first embodiment of the present invention.

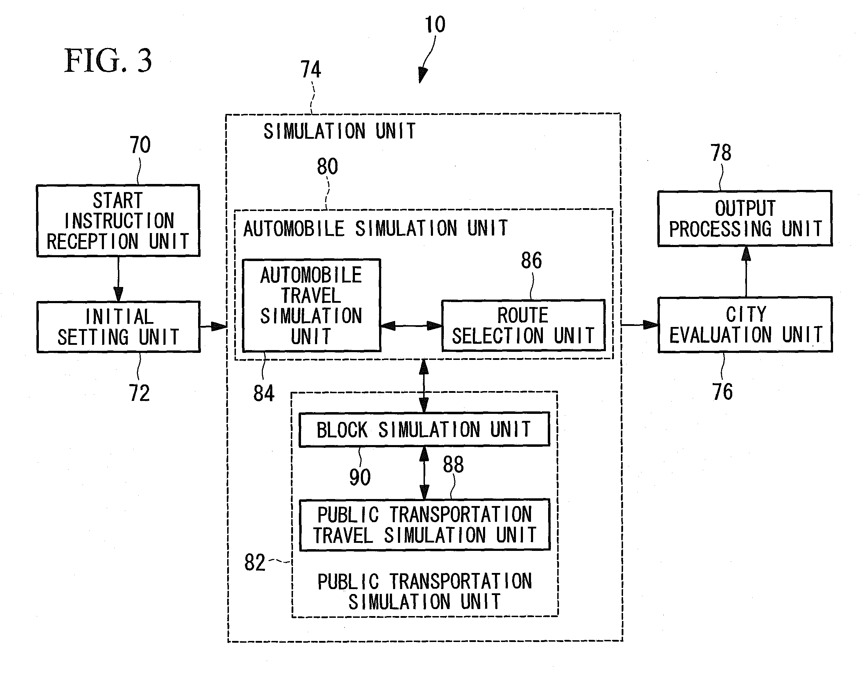

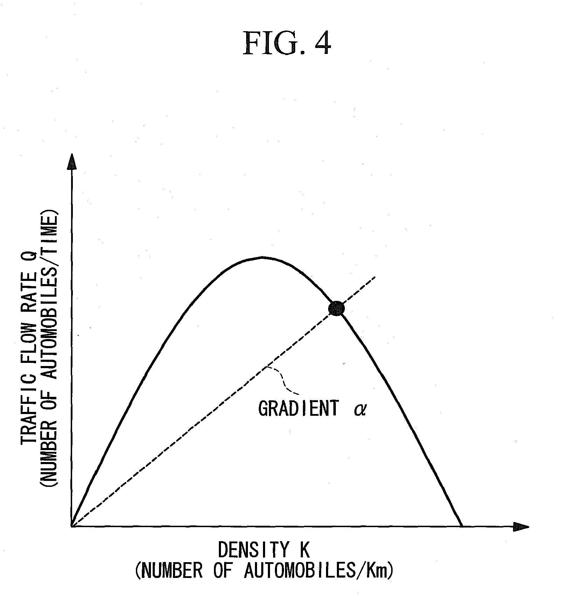

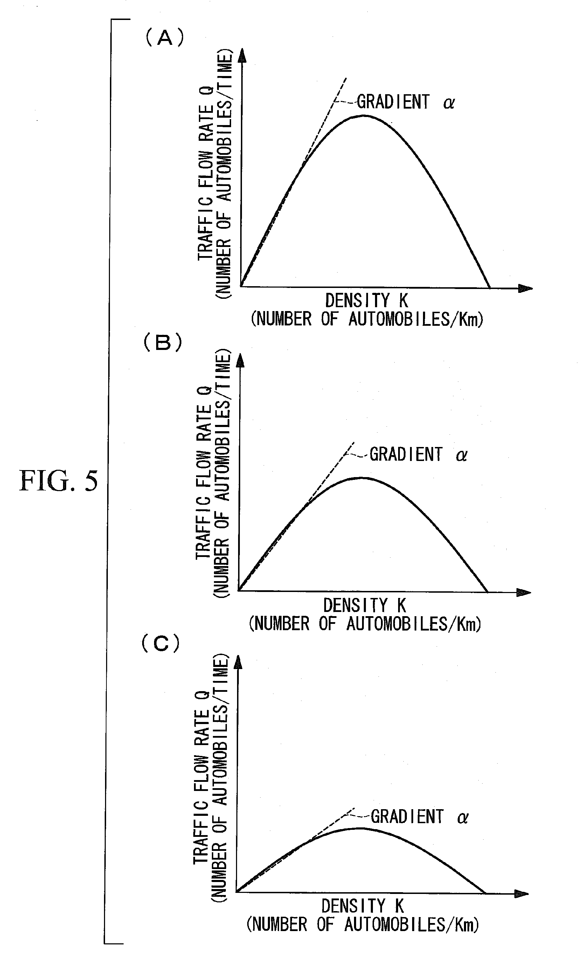

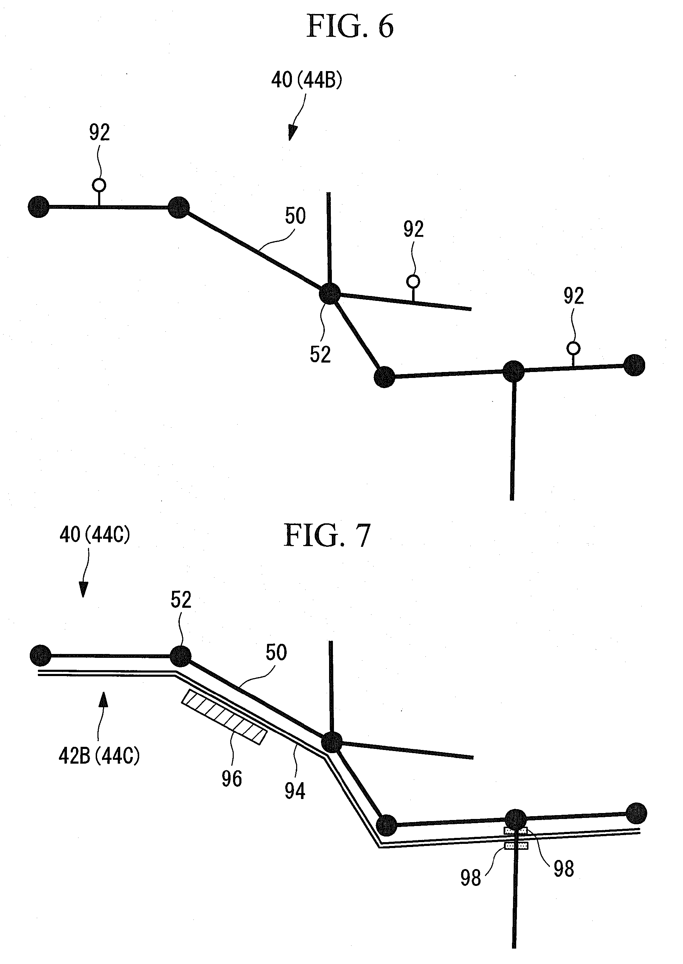

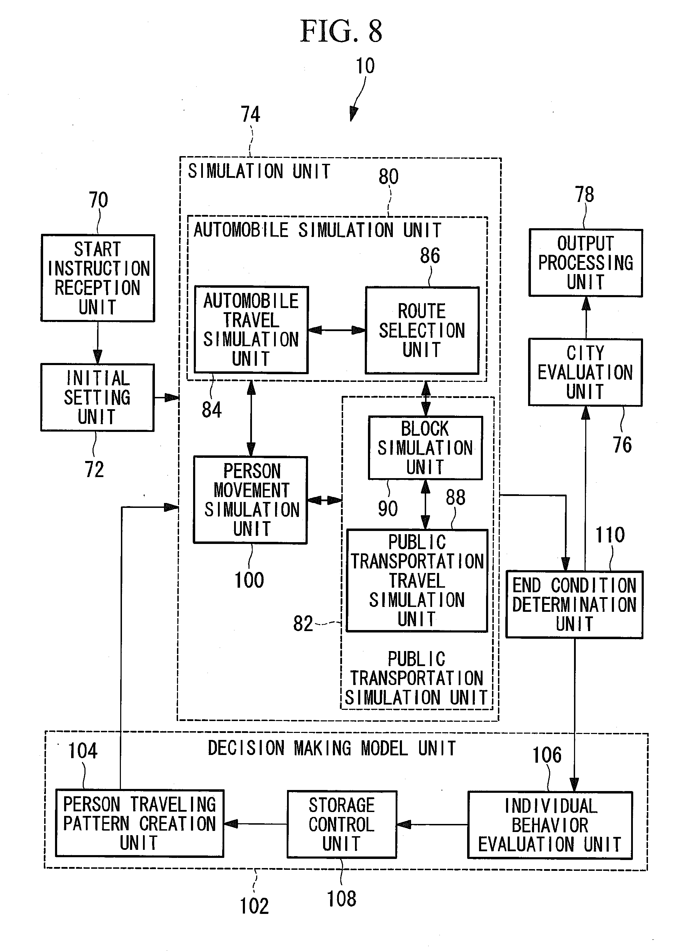

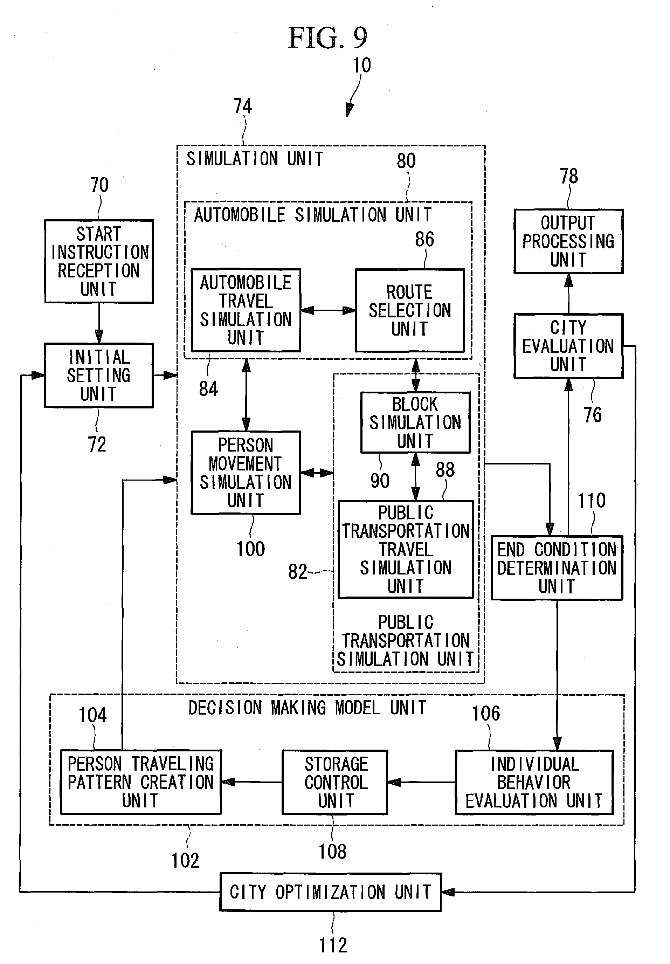

{Fig. 3}
Fig. 3 is a functional block diagram showing functions of the traffic flow simulation apparatus according to the first embodiment of the present invention.
{Fig. 4}
Fig. 4 is a diagram showing an example of Q-K characteristics according to the first embodiment of the present invention.
{Fig. 5}
Fig. 5 illustrates an example of the Q-K characteristics that vary depending on the weather according to the first embodiment of the present invention, (A) illustrating the Q-K characteristics when the weather is fair, (B) illustrating the Q-K characteristics when the weather is rain, (C) illustrating the Q-K characteristics when the weather is snow.
{Fig. 6}
Fig. 6 is a schematic diagram showing a configuration of a road network model and a route network model of a bus in a traffic flow simulation according to a second embodiment of the present invention.
{Fig. 7}
Fig. 7 is a schematic diagram showing a configuration of a road network model and a route network model of a tram in a traffic flow simulation according to the second embodiment of the present invention.
{Fig. 8}
Fig. 8 is a block diagram showing functions of the traffic flow simulation apparatus according to a third embodiment of the present invention.
{Fig. 9}
Fig. 9 is a block diagram showing functions of the traffic flow simulation apparatus according to a modified example of the present invention.

{Description of Embodiments}

An embodiment of a traffic flow simulation apparatus, a traffic flow simulation program, and a traffic flow simulation method according to the present invention will now be described with reference to the drawings.

{First Embodiment}

A first embodiment of the present invention will be described.
Fig. 1 shows a configuration of main parts of an electrical system of a traffic flow simulation apparatus 10 according to the present first embodiment.
The traffic flow simulation apparatus 10 according to the present first embodiment is an apparatus that executes a traffic flow simulation for simulating travel of an automobile model simulating an automobile, in a road network model simulating a road network including a plurality of roads and an intersection connecting a road and a road, and for simulating travel of a guideway transportation model simulating guideway transportation, in a route network model simulating a route of the guideway transportation.
There is no limitation to the number of lanes and the number of left and right turn lanes in the roads, and the roads denote roads that automobiles can travel, such as paved roads, non-paved roads, national roads, prefectural roads, private roads, and parking lots.
Among the automobiles, gasoline automobiles denote motorcycles, ordinary motor vehicles (including taxis), buses, trucks, and the like driven by gasoline.
The automobile models according to the present first embodiment may include electric vehicle models simulating electric vehicles. The electric vehicles denote motorcycles, ordinary motor vehicles (including taxis), buses, and trucks driven by electric power as well as hybrid vehicles of gasoline and electricity (hybrid vehicles of the various automobiles) in which storage batteries can be charged. In the following description, when the cars are simply called automobiles, the automobiles denote both of the gasoline automobiles and the electric vehicles.
Meanwhile, the guideway transportation denotes public transportation, such as a railway and a subway, that travels on a railroad different from the road. The route of the guideway transportation denotes the railroad.
The traffic flow simulation apparatus 10 includes: a CPU (Central Processing Unit) 12 that manages operation of the entire traffic flow simulation apparatus 10; a ROM (Read Only Memory) 14 storing various programs, various parameters, and the like; a RAM (Random Access Memory) 16 that is used as a work area or the like in the execution of various programs by the CPU 12; and an HDD (Hard Disk Drive) 18 as a storage means for storing various programs and various information of a traffic flow simulation program and the like described in detail later.
The traffic flow simulation apparatus 10 further includes: an operation input unit 20 that includes a keyboard, a mouse, and the like and that receives input of various operations; an image display unit 22 that displays various images, such as an image for prompting input of various information necessary for the traffic flow simulation and an image indicating a result of the traffic flow simulation; an external interface 24 that is connected to an external apparatus, such as a printer and other computers, and that transmits and receives various information to and from the external apparatus; and a read unit 28 for reading information stored in a portable storage medium 26. Examples of the portable storage medium 26 include a magnetic disk, an optical disk such as a CD (Compact Disc) and a DVD (Digital Versatile Disc), an IC (Integrated Circuit) card, and a memory card.

The CPU 12, the ROM 14, the RAM 16, the HDD 18, the operation input unit 20, the image display unit 22, the external interface 24, and the read unit 28 are electrically connected to each other through a system bus 30. Therefore, the CPU 12 can access the ROM 14, the RAM 16, and the HDD 18, can figure out an operation state of the operation input unit 20, can display various images on the image display unit 22, can transmit and receive various information to and from the external apparatus through the external interface 24, and can read information from the portable storage medium 26 through the read unit 28.

The configuration of the traffic flow simulation apparatus 10 shown in Fig. 1 is an example, and other modes are also possible. For example, a high-capacity semiconductor storage apparatus may be used in place of the HDD 18, and the traffic flow simulation program may be stored in the portable storage medium 26.

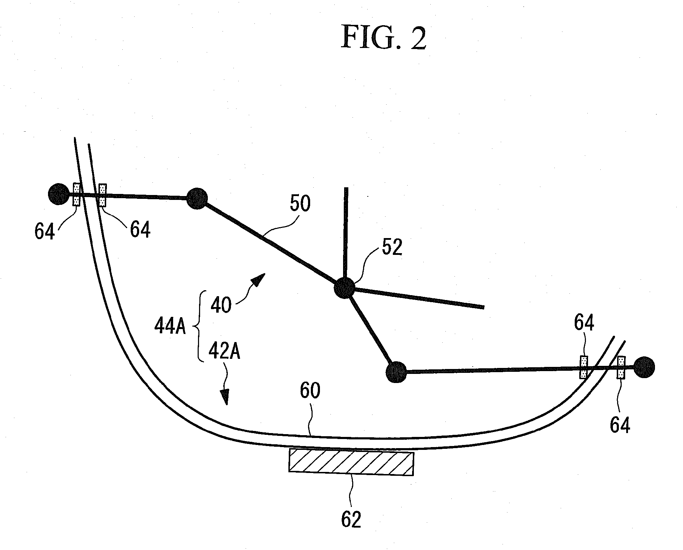

Fig. 2 shows a schematic diagram of a road network model 40 and a route network model 42A constituting a traffic network model 44A in the traffic flow simulation according to the present first embodiment.

In the road network model 40, a link 50 as a road model simulating a minimum section of a road separated by an intersection or the like is connected by a node 52 simulating the intersection. The road network model 40 may simulate an existing road network or may simulate a road network that does not exist.

A speed limit of travelling automobile models, the number of lanes, presence/absence and the number of left and right turn lanes, and the like are set for each link 50. Presence/absence of installation of a traffic light model simulating a traffic light for automobile is set for each node 52.

An altitude can also be set for each link 50 and each node 52. Therefore, a slope of the road simulated by the link 50 can be decided from a difference in the altitude between adjacent link 50 and node 52. A different altitude can also be set in the middle of the link 50.

The traffic light model changes from blue to yellow, from yellow to read, and from red to blue at predetermined time intervals. When the traffic light model is blue, the automobile model is permitted to move from the link 50 to another link 50 through the node 52 provided with the traffic light model. On the other hand, when the traffic light model is red, the automobile model is prohibited from moving from the link 50 to another link 50 through the node 52 provided with the traffic light.

Meanwhile, the route network model 42A includes a route of guideway transportation (route model 60), a station simulating a station for people to board and leave (station model 62), and a block means for temporarily blocking the travel of the automobile according to the travel of the guideway transportation that travels on the route.

The block means according to the present first embodiment is a block apparatus (block apparatus model 64) that is arranged at a place where a road and a route of the guideway transportation intersect and that temporarily blocks the travel of the automobile at the intersecting place when the guideway transportation is traveling through the intersecting place. The block apparatus as a block means is a so-called railroad crossing including a block bar.

The block apparatus model 64 operates in one of a closed state and an open state. When the block apparatus model 64 is in the closed state, the travel of the automobile model at the place where the link 50 and the route model 60 intersect is blocked, i.e. the travel of the automobile model is stopped. On the other hand, when the block apparatus model 64 is in the open state, the travel of the automobile model at the place where the link 50 and the route model 60 intersect is not blocked.

The block apparatus model 64 does not have to simulate opening and closing of the block bar included in the block apparatus as in the actual block apparatus, and the block apparatus model 64 can be similar to the traffic light model. The closed state can be red, and the open state can be blue.

The block apparatus model 64 is in the closed state from the arrival of the guideway transportation model at a predetermined distance before entering the block apparatus model 64 until the arrival of the guideway transportation model at a predetermined distance after passing through the block apparatus model 64, for example.

Fig. 3 is a functional block diagram showing functions of the traffic flow simulation apparatus 10 according to the present first embodiment. More specifically, the functional block diagram shown in Fig. 3 shows a flow of a process of the traffic flow simulation program executed by the CPU 12.

The traffic flow simulation apparatus 10 according to the present first embodiment includes a start instruction reception unit 70, an initial setting unit 72, a simulation unit 74, a city evaluation unit 76, and an output processing unit 78.

The start instruction reception unit 70 receives an instruction for starting the traffic flow simulation. Specifically, the start instruction reception unit 70 determines that the instruction for starting is received when a predetermined image (icon) displayed on the image display unit 22 is pressed through the operation input unit 20, for example.

The initial setting unit 72 performs initial setting of the traffic flow simulation when the start instruction reception unit 70 receives the instruction for starting the traffic flow simulation.

The items set in the initial setting include the traffic network model 44A as a target of the traffic flow simulation, the number of automobile models, a departure place and a destination (O-D information) of each automobile model, departure time of each automobile model, a service schedule of the guideway transportation model, and weather (fair, rain, or snow), as well as the arrangement and capacity of a charging station model simulating a charging station that charges electric vehicles if the automobile models include electric vehicle models.

The service schedule of the guideway transportation model is a timetable showing a departure station, a stop station, a terminal station, a pathway, time of departure at the departure station, time of arrival at the stop station, stop time at the stop station, time of arrival at the terminal station, and the like of the travel of the guideway transportation model.

The traffic network model 44A, the O-D information, the service schedule, and the like may be created in advance by the user, stored in the HDD 18, and read from the HDD 18 by the initial setting unit 72 for the initial setting. The initial setting unit 72 may have a function of creating the traffic network model 44A, the O-D information, the service schedule, and the like, and the user may create the traffic network model 44A, the O-D information, the service schedule, and the like through the initial setting unit 72.

The simulation unit 74 includes an automobile simulation unit 80 and a public transportation simulation unit 82.

The automobile simulation unit 80 includes an automobile travel simulation unit 84 and a route selection unit 86.

The automobile travel simulation unit 84 simulates travel of each automobile model based on a travel route derived from the set O-D information. Specifically, the automobile travel simulation unit 84 calculates the position of the automobile model from the travel speed and the travel time of the automobile model and moves the automobile model to the calculated position to simulate the travel of the automobile model, for example.

The route selection unit 86 derives the travel route of each automobile model from the set O-D information. When there is a traffic jam, the route selection unit 86 may derive a new travel route for avoiding the traffic jam and provide the derived new travel route to the automobile model.

The public transportation simulation unit 82 includes a public transportation travel simulation unit 88 and a block simulation unit 90.

The public transportation travel simulation unit 88 simulates the travel of the guideway transportation model according to the set service schedule. Specifically, the public transportation travel simulation unit 88 calculates the position of the guideway transportation model from the travel speed and the travel time of the guideway transportation model and moves the guideway transportation model to the calculated position to simulate the travel of the guideway transportation model, for example.

The block simulation unit 90 operates the block apparatus model 64 in one of the closed state and the open state according to the travel of the guideway transportation model.

The city evaluation unit 76 evaluates functions of a city expressed by the traffic network model 44A according to the simulation result of the simulation unit 74. Examples of the functions of the city include a traffic jam state of the automobile (location of traffic jam, length of traffic jam, etc.) and average time from the departure place to the destination of the automobile.

The output processing unit 78 executes a process of outputting the evaluation result of the city evaluation unit 76 (hereinafter, called "output process"). Specific examples of the output process include an image display process of displaying the evaluation result on the image display unit 22, a storage process of storing the evaluation result as data in the HDD 18, and a printing process of using a printer connected through the external interface 24 to print the evaluation result on recording paper.

An effect of the traffic flow simulation apparatus 10 according to the present first embodiment will be described.

When the start instruction reception unit 70 receives an instruction for starting the traffic flow simulation, and the initial setting unit 72 performs initial setting of the traffic flow simulation subsequently, the traffic flow simulation apparatus 10 starts the traffic flow simulation.

The automobile travel simulation unit 84 simulates the travel of each automobile model in the travel route derived from the set O-D information, and Q-K characteristics indicated by a Q-K curve shown in Fig. 4 are used to calculate the speed of the automobile model travelling on the link 50, for example.

The Q-K characteristics indicate a relationship between a traffic flow rate Q (number of automobiles/time) and a density K (number of automobiles/km). In other words, the Q-K characteristics indicate characteristics of the road. A gradient $\alpha$ of a line connecting a point on the Q-K characteristics and the origin indicates a travel speed V (km/time).

As shown in Fig. 4, if the density K of the automobile model further increases beyond the top of the Q-K curve, the travel speed decreases, and this causes a traffic jam.

In the traffic flow simulation according to the present first embodiment, the Q-K characteristics may be switched according to the weather set in advance as set values.

Fig. 5 shows an example of the Q-K characteristics that vary according to the weather. Fig. 5(A) indicates the Q-K characteristics when the weather is fair. Fig. 5(B) indicates the Q-K characteristics when the weather is rain. Fig. 5(C) indicates the Q-K characteristics when the weather is snow.

As shown in Figs. 5(A) to 5(C), a link capacity as a maximum value of the traffic flow rate Q decreases in the order of fair, rain, and snow. This indicates that the travel speed of the automobile model decreases in the order of fair, rain, and snow.

Along with the simulation of the travel of the automobile model by the automobile travel simulation unit 84, the traffic flow simulation apparatus 10 simulates the travel of the guideway transportation model by the public transportation travel simulation unit 88, and the block simulation unit 90 operates the block apparatus model 64 according to the travel of the guideway transportation model.

When the block apparatus model 64 enters the closed state (red light), the automobile travel simulation unit 84 stops the travel of the automobile model at the place where the closed block apparatus model 64 is arranged. Because the block apparatus model 64 is included in the route network model 42A, the impact of the guideway transportation on the travel of the automobile is simulated.

More specifically, the block apparatus is more often closed with an increase in the tightness of the service schedule of the guideway transportation, and an increase in the traffic jam of automobiles is predicted. An increase in the traffic jam of automobiles is also predicted, when more routes are created and more block apparatuses are created accordingly. The traffic flow simulation apparatus 10 according to the present first embodiment can simulate the traffic jam state of automobiles in such a case in the traffic flow simulation.

The traffic flow simulation apparatus 10 ends the traffic flow simulation when all initially set automobile models arrive at the destinations or when the initially set time for the execution of the traffic flow simulation has passed, for example. The city evaluation unit 76 makes an evaluation, and the output processing unit 78 outputs the evaluation result. The traffic flow simulation apparatus 10 may be able to make an evaluation by the city evaluation unit 76 and output the evaluation result by the output processing unit 78 not only after the end of the traffic flow simulation, but also in real time during the execution of the traffic flow simulation.

As described, in the traffic flow simulation apparatus 10 according to the present first embodiment, the automobile travel simulation unit 84 simulates the travel of an automobile model simulating an automobile, in a road network model simulating a road network including a plurality of roads and an intersection connecting a road and a road, and the public transportation travel simulation unit 88 simulates the travel of a guideway transportation model simulating guideway transportation, in the route network model 42A simulating a route of the guideway transportation. The route network model 42A is provided with the block apparatus model 64 simulating a block apparatus that is arranged at a place where the road and the route of the guideway transportation intersect and that temporarily blocks the travel of the automobile at the intersecting place when the guideway transportation is traveling through the intersecting place.

Therefore, the traffic flow simulation apparatus 10 according to the present first embodiment can predict the impact of the public transportation on the traffic, and particularly, can predict the impact of the travel of the guideway transportation on the travel of the automobile.

{Second Embodiment}

A second embodiment of the present invention will be described.

An electrical configuration and a functional block diagram of the traffic flow simulation apparatus 10 according to the present second embodiment are similar to the electrical configuration and the functional block diagram of the traffic flow simulation apparatus 10 according to the first embodiment shown in Figs. 1 and 3, and the description will not be repeated.

The traffic flow simulation apparatus 10 according to the present second embodiment is an apparatus that executes a traffic flow simulation for simulating travel of an automobile model simulating an automobile in a road network model and for simulating travel of a roadway public transportation model simulating roadway public transportation in a route network model simulating a route of the roadway public transportation.

The roadway public transportation denotes public transportation, such as a bus and a tram, that moves along a road travelled by automobiles.

Figs. 6 and 7 show schematic diagrams of a traffic network model in the traffic flow simulation according to the present second embodiment. In Figs. 6 and 7, the same constituent parts as in Fig. 2 are designated with the same reference numerals as in Fig. 2, and the description will not be repeated.

Fig. 6 is a schematic diagram of a traffic network model 44B when the roadway public transportation is a bus (hereinafter, called "shuttle bus"). The route of the shuttle bus overlaps with the road. The shuttle bus stops at a position of a set stop to temporarily block the travel of the automobile travelling behind the shuttle bus, and the stop serves as a block means (stop model 92).

More specifically, the shuttle bus model simulating the shuttle bus travels on a route model corresponding to part of the road network model 40, in the same way as the automobile model. If the link 50 of the road network model 40 includes two lanes each way and a bus priority lane is set, the bus priority lane serves as the route model, and the shuttle bus model travels on the bus priority lane.

Meanwhile, Fig. 7 is a schematic diagram of a traffic network model 44C when the roadway public transportation is a tram. The traffic network model 44C includes the road network model 40 and a route network model 42B including a route of a tram (route model 94), a station simulating a station for people to board and leave (station model 96), and a block means for temporarily blocking the travel of the automobile according to the travel of the tram travelling on the route. The route of the tram is along the road, and the tram model simulating the tram travels on the route model 94 along the road network model 40.

The block means is a traffic light (traffic light model 98) that is arranged at a place where the road and the route intersect and that temporarily blocks the travel of the automobile at the intersecting place when the tram is traveling through the intersecting place. More specifically, the traffic light model 98 is arranged at a place where the link 50 and the route model 94 intersect, i.e. a place where the tram model crosses the link 50. The traffic light model 98 is similar to the block apparatus model 64, and the description will not be repeated.

Although Figs. 6 and 7 are used to separately describe the case in which the route network model includes the route network model of the roadway bus and the case in which the route network model includes the route network model 42B of the tram, the traffic network model may include both of the route network model of the roadway bus and the route network model 42B of the tram, or the traffic network may include at least one of the route network model of the shuttle bus and the route network model 42 of the tram as well as the route network model 42A of the guideway transportation. In the following description, the guideway transportation model, the roadway bus model, and the tram model will be collectively called a public transportation model.

The initial setting unit 72 further sets a service schedule of the roadway public transportation model. The service schedule when the roadway public transportation is a shuttle bus is a timetable showing a stop from which the shuttle bus departs, a stop where the shuttle bus stops, a stop where the shuttle bus terminates, a pathway, time of arrival at each stop, stop time at each stop, and the like. Meanwhile, the service schedule when the roadway public transportation is a shuttle train is similar to the service schedule of the guideway transportation.

When the start instruction reception unit 70 receives an instruction for starting the traffic flow simulation, and the initial setting unit 72 performs initial setting of the traffic flow simulation subsequently, the traffic flow simulation apparatus 10 starts the traffic flow simulation. When the roadway public transportation is a shuttle bus, the public transportation travel simulation unit 88 simulates the travel of the shuttle bus model, in the same way as the automobile travel simulation unit 84. Therefore, the travel of the shuttle bus model is simulated as one of the automobile models.

The travel of the shuttle bus model is simulated based on the set service schedule. Therefore, when the shuttle bus model stops at the set position of the stop model 92, the travel of the automobile model travelling behind the shuttle bus model is temporarily blocked. Specifically, if the link 50 includes one lane each way, the following automobile model stops behind the shuttle bus model along with the stop of the shuttle bus model, and a traffic jam tends to occur. Meanwhile, if the link 50 includes two or more lanes each way, the following automobile model moves to an adjacent lane. Therefore, the density of the automobile models increases in the adjacent lane, and the traffic jam tends to occur.

The city evaluation unit 76 further calculates a delay time from the service schedule of the shuttle bus model. The travel of the shuttle bus model is simulated as one of the automobile models. Therefore, when there is a traffic jam in the pathway of the shuttle bus model, the shuttle bus model is caught in the traffic jam and is delayed from the set service schedule. Even if there is a delay in the traffic flow simulation apparatus 10 according to the present second embodiment, the stop time at each stop model indicated by the service schedule is not reduced, and the travel speed of the shuttle bus model is not increased.

The city evaluation unit 76 calculates the delay from the service schedule of the shuttle bus model, and the calculation result serves as a degree of comfort of passengers of the shuttle bus. More specifically, the degree of comfort decreases with an increase in the delay, and the degree of comfort increases with a decrease in the delay. As described, the shuttle bus can be a factor of a traffic jam. Therefore, an increase in the number of shuttle buses may reduce the degree of comfort of the passengers of the shuttle buses.

Meanwhile, when the roadway public transportation is a shuttle train, the public transportation travel simulation unit 88 in the second embodiment simulates the travel of the tram model travelling on the roadway network model 42B based on the set service schedule, and the block simulation unit 90 operates the traffic light model 98 according to the travel of the tram model, as in the guideway transportation model. Therefore, the traffic light is more often red with an increase in the tightness of the service schedule of the shuttle train, and an increase in the traffic jam of automobiles is predicted. An increase in the traffic jam of automobiles is also predicted, when more routes of shuttle trains are created and more traffic lights are created accordingly.

As described, the roadway public transportation is a bus, and the block means is a stop of the bus in the traffic flow simulation apparatus 10 according to the present second embodiment. Therefore, the impact of the bus on the travel of the automobile and the impact of the automobile on the bus are simulated, and the impact of the roadway public transportation on the traffic can be predicted.

The roadway public transportation is a tram, and the block means is a traffic light that operates according to the travel of the tram in the traffic flow simulation apparatus 10 of the present second embodiment. Therefore, the impact of the tram on the travel of the automobile is simulated, and the impact of the travel of the tram on the travel of the automobile can be predicted.

{Third Embodiment}

A third embodiment of the present invention will be described.

An electrical configuration of the traffic flow simulation apparatus 10 according to the present third embodiment is similar to the electrical configuration of the traffic flow simulation apparatus 10 according to the first embodiment shown in Fig. 1, and the description will not be repeated. The traffic network model 44 according to the present third embodiment is similar to the traffic network model 44 shown in Figs. 2, 6, and 7, and the description will not be repeated.

The traffic flow simulation apparatus 10 according to the present third embodiment simulates not only the travel of the automobile and the public transportation, but also simulates movement of an individual (agent).

Fig. 8 is a functional block diagram showing functions of the traffic flow simulation apparatus 10 according to the present third embodiment. In Fig. 8, the same constituent parts as in Fig. 3 are designated with the same reference numerals as in Fig. 3, and the description will not be repeated.

In the traffic flow simulation apparatus 10 according to the present third embodiment, the simulation unit 74 includes a person movement simulation unit 100.

The person movement simulation unit 100 simulates movement of a person model simulating an individual. Specifically, the person movement simulation unit 100 calculates a position of the person model from the relationship between the movement speed and the travel time of the person model and moves the person model to the calculated position to simulate the movement of the person model, for example. The person model according to the present third embodiment moves on the road network model 40.

The automobile travel simulation unit 84 according to the present third embodiment simulates riding of the person model on the automobile model and leaving of the person model from the automobile model. The public transportation travel simulation unit 88 according to the present third embodiment simulates boarding of the person model on the public transportation model and leaving of the person model from the public transportation model.

The traffic flow simulation apparatus 10 according to the present third embodiment further includes a decision making model unit 102.

The decision making model unit 102 includes a person traveling pattern creation unit 104, an individual behavior evaluation unit 106, and a storage control unit 108.

The person traveling pattern creation unit 104 creates a traveling pattern of a person including a case in which the person uses at least one of the automobile and the public transportation to arrive at the set destination from the set departure place. The person traveling pattern creation unit 104 outputs the traveling pattern to the simulation unit 74. Which one of the automobile and the public transportation is to be used is initially set for each person model. Specifically, for example, this may be randomly set for each person model, or the proportion of person models using automobiles and the proportion of person models using public transportation may be set. This setting will be called use traffic means setting.

The proportion may be changed according to the set weather. For example, if the set weather is rain or snow, the proportion of person models using automobile models is increased. On the other hand, if the set weather is fair, the proportion of person models using public transportation is increased. The proportion can also be changed based on regionality the person lives in. For example, in a simulation of movement of a person living in a location with regionality in which short time to the destination is preferred or a person living in a region with a high ownership ratio of automobile, the proportion of person models using automobile models is increased. In a simulation of a person living in a region with enhanced public transportation, the proportion of person models using public transportation models is increased.

The individual behavior evaluation unit 106 calculates behavior evaluation values, such as travel time and cost (fare), of a person model from the departure place to the destination set for each person model based on the traveling pattern. In general, the behavior evaluation values are based on the sense of values of the individual, and the values also vary depending on the regionality and sensitivity.

When the travel time of the person model based on the traveling pattern calculated by the individual behavior evaluation unit 106 is equal to or smaller than a preset tolerance, the storage control unit 108 controls the HDD 18 to store the traveling pattern and the simulation result of the person model using the traveling pattern.

The tolerance is a time sense as a standard for the arrival of the person at the destination. Therefore, different values (time) can be set for the tolerance according to the time zone in the simulation of the movement of the person, the regionality the person lives in, the weather, and the like. For example, a short tolerance may be set when the time zone in the simulation of the movement of the person is in the morning or when an individual in the regionality in which short time to the destination is preferred is simulated. A long tolerance may be set when the weather is rain.

The traffic flow simulation apparatus 10 according to the present third embodiment includes an end condition determination unit 110.

The end condition determination unit 110 determines whether a condition determined in advance to end the simulation of the movement of the individual is met. If the condition is met, the end condition determination unit 110 ends the simulation of the movement of the person, and the city evaluation unit 76 makes an evaluation based on the simulation result of the movement of the person. On the other hand, if the condition is not met, the decision making model unit 102 causes the person traveling pattern creation unit 104 to create a new traveling pattern. The end condition is the number of repetitions of the simulation of the movement of the person, for example.

An effect of the traffic flow simulation apparatus 10 according to the present third embodiment will be described. An effect of the decision making model unit 102 will be mainly described below, and an effect of the simulation unit 74 or the like are similar to that of the first embodiment unless otherwise specifically described.

When the start instruction reception unit 70 receives an instruction for starting the traffic flow simulation, and the initial setting unit 72 performs initial setting of the traffic flow simulation subsequently, the traffic flow simulation apparatus 10 starts the traffic flow simulation. Settings specific to the present third embodiment are set in the initial setting unit 72, such as a movement speed of a person model, O-D information of the person model, departure time of the person model, use traffic means setting, a tolerance, an end condition, a maximum number of persons that can be boarded on the public transportation model, and a fare of the public transportation model.

The person traveling pattern creation unit 104 creates a traveling pattern of each person model based on the content set in the initial setting unit 72, particularly the O-D information of the person model and the use traffic means setting. When the guideway transportation is used, specific examples of the traveling pattern include departure time of the person model, a movement route from the departure place of the person model to the station model where the person model boards, and a movement route from the station model where the person model leaves to the destination of the person model.

The simulation unit 74 simulates the movement of the person model from the departure place to the destination based on the traveling pattern. For example, for the person model for which the person traveling pattern creation unit 104 has created the traveling pattern of using the guideway transportation, the person movement simulation unit 100 simulates the movement of the person model from the departure place to the station model 62 for boarding. The public transportation travel simulation unit 88 simulates boarding of the person model at the station model 62 for boarding and simulates leaving of the person model at the station model 62 for leaving. The person movement simulation unit 100 then simulates the movement of the person model from the station model 62 for leaving to the destination.

The maximum number of persons that can be boarded is set to the public transportation model. Therefore, if a large number of person models use the public transportation model, the person models may not be able to board on the public transportation model even if the person models arrive at the station models and the stop models, and waiting time may be generated. The order of the person models boarding on the public transportation model is the order of the person models arriving at the station models or the stop models.

When the simulation of the movement to the destination is finished for all person models, the individual behavior evaluation unit 106 calculates the travel time of the person model from the set departure place to the set destination based on the traveling pattern and determines whether the travel time is equal to or smaller than a preset tolerance. The storage control unit 108 causes the HDD 18 to store the traveling pattern equal to or smaller than the tolerance and the simulation result of the person model using the traveling pattern.

On the other hand, the person traveling pattern creation unit 104 creates a new traveling pattern for the person model with the travel time greater than the tolerance. The new traveling pattern is created by changing the transportation used by the person model or by changing the departure time.

The traffic flow simulation apparatus 10 according to the present third embodiment repeats the creation of the traveling pattern, the simulation of the movement of the person model based on the traveling pattern, and the evaluation of the travel time using the tolerance, until the end condition determination unit 110 determines that the end condition is met.

In this way, the traveling pattern of the person until the arrival at the destination is balanced by repeating the evaluation of the traveling pattern, and the traffic flow simulation apparatus 10 according to the present third embodiment can more accurately evaluate the change in the traffic demand in the set public transportation model.

The city evaluation unit 76 according to the present third embodiment calculates a use state of the person in the public transportation model for each traveling pattern stored in the HDD 18. Examples of the use state of the public transportation model include the number of persons boarding on the public transportation model, a degree of congestion of the public transportation model, total waiting time until boarding on the public transportation model, and a total amount of fare required until the arrival at the destination.

The degree of congestion is calculated by dividing the number of persons boarding on each public transportation model by the maximum number of persons that can be boarded on each public transportation model.

The city evaluation unit 76 may calculate not only the use state of the public transportation model for each traveling pattern, but also a sum or an average of the use states of a plurality of person models for which the movement is simulated.

The city evaluation unit 76 may also indicate comfort of the movement of the person by calculating travel time, which is required time of each person model from the departure place to the destination, and average travel time of a plurality of person models.

As described, the traffic flow simulation apparatus 10 according to the present third embodiment includes the person traveling pattern creation unit 104 that creates the traveling pattern of the person including the case in which at least one of the automobile and the public transportation is used to arrive at the set destination from the set departure place. The automobile travel simulation unit 84 simulates riding of the person model on the automobile model and leaving of the person model from the automobile model based on the traveling pattern created by the person traveling pattern creation unit 104. The public transportation travel simulation unit 88 simulates boarding of the person model on the public transportation model and leaving of the person model from the public transportation model based on the traveling pattern created by the person traveling pattern creation unit 104.

Therefore, the traffic flow simulation apparatus 10 according to the present third embodiment can simulate the behavior of the person using the automobile and the public transportation.

In the traffic flow simulation apparatus 10 according to the present third embodiment, the individual behavior evaluation unit 106 calculates the travel time of the person model from the set departure place to the arrival at the destination based on the traveling pattern. Therefore, the impact of the public transportation on the movement of the person can be more accurately evaluated.

The traffic flow simulation apparatus 10 according to the present third embodiment causes the HDD 18 to store the traveling pattern, which is equal to or smaller than the tolerance indicating the time sense as a standard for the arrival of the person at the destination, and the simulation result of the person model using the traveling pattern. Therefore, average behavior of persons using the public transportation can be discriminated.

In the traffic flow simulation apparatus 10 according to the present third embodiment, the number of persons that can be boarded is set in the public transportation model, and the city evaluation unit 76 calculates the use state of the person in the public transportation model. Therefore, the impact of the public transportation on the movement of the person can be multilaterally evaluated.

{First Modified Example}

Energy consumption by travelling is set to the public transportation model in the traffic flow simulation 10 according to a first modified example, and the city evaluation unit 76 calculates an instantaneous value and a total of the energy consumption of the public transportation model consumed by travelling.

The energy consumption is power consumption if the public transportation model is a vehicle travelled by electric power (railway, tram, etc.). For example, power consumption (kW) during acceleration and power consumption (kW) at constant speed are preset. The power consumption during acceleration is multiplied by the time of acceleration, and the power consumption at constant speed is multiplied by the time of travel at constant speed. These are added to calculate the energy consumption.

As a result, the impact of the implementation of the public transportation can be more multilaterally evaluated in the present first modified example. Particularly, the electric energy used by the public transportation can be evaluated in a region where public transportation that travels by electric power is implemented. Therefore, the power demand caused by the public transportation is indicated, and balance of power supply and demand as well as necessary power infrastructures can be evaluated.

A reduction in the $CO_2$ emission by automobiles can be expected if people frequently use the public transportation as a result of the implementation of the public transportation.

Therefore, the city evaluation unit 76 may calculate the $CO_2$ emission of an automobile model of a gasoline automobile (hereinafter, called "gasoline automobile model") based on the following Formulas (1) and (2), for example, and may calculate a change in the $CO_2$ emission due to the implementation of the public transportation.

$$\text{Fuel consumption} = \text{travel distance} \times \text{average fuel consumption} \quad ... \quad (1)$$

$$CO_2 \text{ emission} = \text{fuel consumption} \times \text{constant} \quad ... \quad (2)$$

The initial setting unit 72 sets the average fuel consumption of the gasoline automobile model in Formula (1) (for example, 30 km/L). The constant in Formula (2) is a set value set by the initial setting unit 72 to calculate the $CO_2$ emission from the fuel consumption.

In this way, the $CO_2$ emission of the gasoline automobile model is calculated based on the preset set value and the travel distance of the gasoline automobile model.

If the automobile models include electric vehicle models simulating electric vehicles, the $CO_2$ emission of the electric vehicle models may be 0 (zero), for example. $CO_2$ is emitted by a thermal power plant to generate electric power consumed by storage batteries of the electric vehicle models, for example. Therefore, the electric vehicle models may be considered to emit $CO_2$.

Specifically, the $CO_2$ emission of the electric vehicle models is calculated based on the following formula (3).

$$CO_2 \text{ emission} = \text{storage battery consumption} \times \text{constant} \ldots$$

$$(3)$$

The constant in Formula (3) is a set value set by the initial setting unit 72 to calculate the $CO_2$ emission from the storage battery consumption, and the $CO_2$ emission of the electric vehicle model is set as a value smaller than the $CO_2$ emission of the gasoline automobile model.

{Second Modified Example}

The traffic flow simulation apparatus 10 according to a second modified example includes a city optimization unit 112 as shown in Fig. 9.

The city optimization unit 112 changes the traffic network model based on the evaluation result of the city evaluation unit 76.

For example, if the automobile models include electric vehicle models, a charging station model simulating a charging station for charging the electric vehicle model is arranged on the traffic network model.

The city evaluation unit 76 derives a relationship between total travel time of the electric vehicle models obtained by the traffic flow simulation and the number of charging station models. If it is determined that the total travel time is not reduced even if the number of charging stations is increased, a new traffic network model is created by reducing the charging station models, or a traffic network model is created by arranging the charging station models in different locations. The traffic flow simulation apparatus 10 performs the traffic flow simulation based on the newly created traffic network model.

Although the embodiments are used to describe the present invention, the technical scope of the present invention is not limited to the scope described in the embodiments. Various changes and modifications can be applied to the embodiments without departing from the scope of the invention, and modes with the changes or modifications are also included in the technical scope of the present invention.

{Reference Signs List}

10    traffic flow simulation apparatus

12    CPU

40    road network model

42A    route network model

42B    route network model

50    link

52    node

64    block apparatus model

76    city evaluation unit

84    automobile travel simulation unit

88    public transportation travel simulation unit

92    stop model

98    traffic light model

104    person traveling pattern creation unit

106    individual behavior evaluation unit

108    storage control unit

**Claims**

1. A traffic flow simulation apparatus comprising:

   an automobile travel simulation means for simulating travel of an automobile model simulating an automobile in a road network model simulating a road network including a plurality of roads and intersections connecting the plurality of roads; and
   a public transportation travel simulation means for simulating travel of a public transportation model simulating public transportation in a route network model simulating a route network including a block means for temporarily blocking travel of the automobile according to a route of at least one of guideway transportation and roadway public transportation and according to travel of the public transportation travelling on the route.

2. The traffic flow simulation apparatus according to claim 1, wherein
   the block means is a block apparatus that is arranged at a place where the roads and the route of the guideway transportation intersect and that temporarily blocks the travel of the automobile at the intersecting place when the guideway transportation is traveling through the intersecting place.

3. The traffic flow simulation apparatus according to claim 1, wherein
   the roadway public transportation is a bus,
   the route of the roadway public transportation overlaps with the roads, and
   the block means is a stop where the bus stops.

4. The traffic flow simulation apparatus according to claim 1, wherein
   the roadway public transportation is a tram,
   the route of the roadway public transportation is along the roads, and
   the block means is a traffic light that is arranged at a place where the roads and the route of the tram intersect and that temporarily blocks the travel of the automobile at the intersecting place when the tram is traveling through the intersecting place.

5. The traffic flow simulation apparatus according to any one of claims 1 to 4, further comprising
   a person traveling pattern creation means for creating a traveling pattern of a person including a case in which the person uses at least one of the automobile and the public transportation to arrive at a set destination from a set departure place, wherein
   the automobile travel simulation means simulates riding of a person model on the automobile model and leaving of the person model from the automobile model based on the traveling pattern created by the person traveling pattern creation means, and
   the public transportation travel simulation means simulates boarding of the person model on the public transportation model and leaving of the person model from the public transportation model based on the traveling pattern created by the person traveling pattern creation means.

**6.** The traffic flow simulation apparatus according to any one of claims 1 to 5, further comprising a travel time calculation means for calculating travel time for the person model to travel from the set departure place to the set destination based on the traveling pattern.

**7.** The traffic flow simulation apparatus according to claim 6, further comprising a storage control means for controlling a storage means to store the traveling pattern and a simulation result of the person model using the traveling pattern when the travel time calculated by the travel time calculation means is equal to or smaller than a preset tolerance.

**8.** The traffic flow simulation apparatus according to any one of claims 5 to 7, wherein a maximum number of persons that can be boarded is set in the public transportation model, and the traffic flow simulation apparatus further comprises a use state calculation means for calculating a use state of the person in the public transportation model.

**9.** The traffic flow simulation apparatus according to any one of claims 1 to 8, wherein energy consumption by travelling is set in the public transportation model, and the traffic flow simulation apparatus further comprises an energy consumption calculation means for calculating total energy consumption consumed by the travel of the public transportation model.

**10.** A traffic flow simulation program for causing a computer to function as:

an automobile travel simulation means for simulating travel of an automobile model simulating an automobile in a road network model simulating a road network including a plurality of roads and intersections connecting the plurality of roads;
a public transportation travel simulation means for simulating travel of a public transportation model simulating public transportation in a route network model simulating a route network including a route of at least one of guideway transportation and roadway public transportation that are the public transportation; and
a block simulation means for simulating operation of a block means model simulating a block means for temporarily blocking the travel of the automobile according to the travel of the public transportation travelling on the route.

**11.** A traffic flow simulation method comprising:

a first step of simulating travel of an automobile model simulating an automobile in a road network model simulating a road network including a plurality of roads and intersections connecting the plurality of roads, and of simulating travel of a public transportation model simulating public transportation in a route network model simulating a route network including a route of at least one of guideway transportation and roadway public transportation that are the public transportation; and
a second step of simulating operation of a block means model simulating a block means for temporarily blocking the travel of the automobile according to the travel of the public transportation travelling on the route.

# FIG. 1

10

| 12 | 14 | 16 | 18 |
|---|---|---|---|
| CPU | ROM | RAM | HDD |

30

| OPERATION INPUT UNIT | IMAGE DISPLAY UNIT | EXTERNAL INTERFACE | READ UNIT | ← | PORTABLE STORAGE MEDIUM |
|---|---|---|---|---|---|
| 20 | 22 | 24 | 28 | | 26 |

EP 2 665 050 A1

FIG. 2

FIG. 3

SIMULATION UNIT 74

10

START INSTRUCTION RECEPTION UNIT 70

INITIAL SETTING UNIT 72

AUTOMOBILE SIMULATION UNIT 80

AUTOMOBILE TRAVEL SIMULATION UNIT 84

ROUTE SELECTION UNIT 86

BLOCK SIMULATION UNIT 90

88

PUBLIC TRANSPORTATION TRAVEL SIMULATION UNIT

PUBLIC TRANSPORTATION SIMULATION UNIT 82

OUTPUT PROCESSING UNIT 78

CITY EVALUATION UNIT 76

EP 2 665 050 A1

# FIG. 4

FIG. 5

(A)

TRAFFIC FLOW RATE Q
(NUMBER OF AUTOMOBILES/TIME)

GRADIENT $\alpha$

DENSITY K
(NUMBER OF AUTOMOBILES/Km)

(B)

TRAFFIC FLOW RATE Q
(NUMBER OF AUTOMOBILES/TIME)

GRADIENT $\alpha$

DENSITY K
(NUMBER OF AUTOMOBILES/Km)

(C)

TRAFFIC FLOW RATE Q
(NUMBER OF AUTOMOBILES/TIME)

GRADIENT $\alpha$

DENSITY K
(NUMBER OF AUTOMOBILES/Km)

# FIG. 6

# FIG. 7

# FIG. 8

10

SIMULATION UNIT
74

AUTOMOBILE SIMULATION UNIT
80

86

AUTOMOBILE TRAVEL SIMULATION UNIT
84

ROUTE SELECTION UNIT

70
START INSTRUCTION RECEPTION UNIT

72
INITIAL SETTING UNIT

100
PERSON MOVEMENT SIMULATION UNIT

BLOCK SIMULATION UNIT
90

88

PUBLIC TRANSPORTATION TRAVEL SIMULATION UNIT
82

PUBLIC TRANSPORTATION SIMULATION UNIT

78
OUTPUT PROCESSING UNIT

CITY EVALUATION UNIT
76

110
END CONDITION DETERMINATION UNIT

DECISION MAKING MODEL UNIT
102

104
PERSON TRAVELING PATTERN CREATION UNIT

STORAGE CONTROL UNIT
108

106
INDIVIDUAL BEHAVIOR EVALUATION UNIT

22

# FIG. 9

## INTERNATIONAL SEARCH REPORT

| | International application No. |
|---|---|
| | PCT/JP2011/077570 |

### A. CLASSIFICATION OF SUBJECT MATTER
*G08G1/00*(2006.01)i, *B61L27/00*(2006.01)i, *B61L29/28*(2006.01)i

According to International Patent Classification (IPC) or to both national classification and IPC

### B. FIELDS SEARCHED

Minimum documentation searched (classification system followed by classification symbols)
G08G1/00, B61L27/00, B61L29/28

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X Y | Nozomi KUDO, "Light Rail no Donyu no Jitsugen ni Mukete -Fukugo Kotsuryu Simulator ni yoru Donyu Koka no Hyoka-", Heisei 19 Nen Forum 2007 Koen Gaiyo, National Traffic Safety and Environment Laboratory, 15 November 2007 (15. 11.2007), pages 33 to 36 | 1,3,10-11 2,4-9 |
| Y | JP 2926465 B2 (Railway Technical Research Institute), 28 July 1999 (28.07.1999), paragraphs [0030] to [0041], [0051] to [0064], [0067], [0085] to [0086]; fig. 1 to 4 (Family: none) | 2,5-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 March, 2012 (13.03.12) | 19 March, 2012 (19.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/077570

C (Continuation).   DOCUMENTS CONSIDERED TO BE RELEVANT

| Category* | Citation of document, with indication, where appropriate, of the relevant passages | Relevant to claim No. |
|---|---|---|
| Y | Takeshi MIZUMA, "Simulation o Riyo shita LRT Donyu Koka no Teiryoteki Hyoka Shuho ni Tsuite (Dai 1 Ho) -LRT Kyoto Donyu Project-", Heisei 17 Nen National Traffic Safety and Environment Laboratory Kenkyu Happyokai Koen Gaiyo, National Traffic Safety and Environment Laboratory, 17 November 2005 (17.11.2005), pages 115 to 120 | 4-9 |
| Y | JP 2005-202546 A (Aero Asahi Corp.), 28 July 2005 (28.07.2005), paragraphs [0007] to [0009], [0014] to [0023], [0036] to [0042]; fig. 1 to 6 (Family: none) | 5-9 |
| Y | JP 2010-151544 A (Shigenao OMATSU), 08 July 2010 (08.07.2010), paragraphs [0029] to [0034]; fig. 1 to 6 (Family: none) | 7-9 |
| Y | JP 2003-25996 A (Yazaki Corp.), 29 January 2003 (29.01.2003), paragraphs [0028] to [0031], [0055] to [0056]; fig. 1 to 19 (Family: none) | 8-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4506663 B